# EUROPEAN PATENT SPECIFICATION

(11) **EP 1 669 556 B1**
(45) Date of publication and mention of the grant of the patent: **19.03.2008**
(21) Application number: 05025059.6
(22) Date of filing: 16.11.2005
(51) Int. Cl.: F01L 1/18, F16C 33/58

(54) **Rocker arm bearing**
Wälzlager eines Kipphebels
Roulement de culbuteur

(30) Priority: 17.11.2004 JP 2004333110
(43) Date of publication of application: 14.06.2006
(73) Proprietor: JTEKT Corporation, Osaka-shi Osaka 542-8502 (JP)
(72) Inventor: Ochi, Shinya, Chuo-ku Osaka-shi Osaka 542-8502 (JP); Nishiuchi, Jun, Chuo-ku Osaka-shi Osaka 542-8502 (JP); Nishizawa, Chiaki, Chuo-ku Osaka-shi Osaka 542-8502 (JP); Waseda, Yoshitaka, Chuo-ku Osaka-shi Osaka 542-8502 (JP)
(74) Representative: Schaeberle, Steffen

(56) References cited:
- EP-A- 1 411 142
- EP-A- 1 462 669
- EP-A- 1 482 190
- US-A- 5 054 440
- US-A- 5 611 250
- US-A1- 2003 037 635
- PATENT ABSTRACTS OF JAPAN vol. 011, no. 175 (M-596), 5 June 1987 (1987-06-05) & JP 62 007908 A (HONDA MOTOR CO LTD), 14 January 1987 (1987-01-14)

## Description

### BACKGROUND OF THE INVENTION

The present invention relates to a rocker arm bearing which is incorporated in a rocker arm which is attached to a valve train of an engine of an automobile or the like so as to open and close a corresponding valve, and more particularly to a rocker arm bearing made up of a support shaft in which end faces of shaft end portions of the support shaft are crimped to inner circumferential edges of shaft end inserting holes in opposed side walls, a plurality of rollers which are disposed on a raceway portion at a shaft intermediate portion of the support shaft and an outer ring which is rotatably supported on the support shaft via the plurality of rollers.

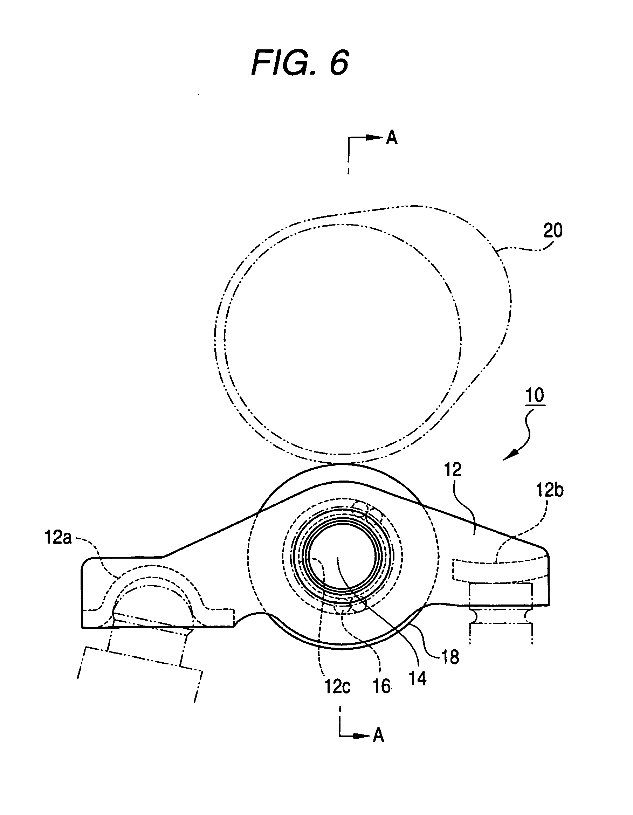

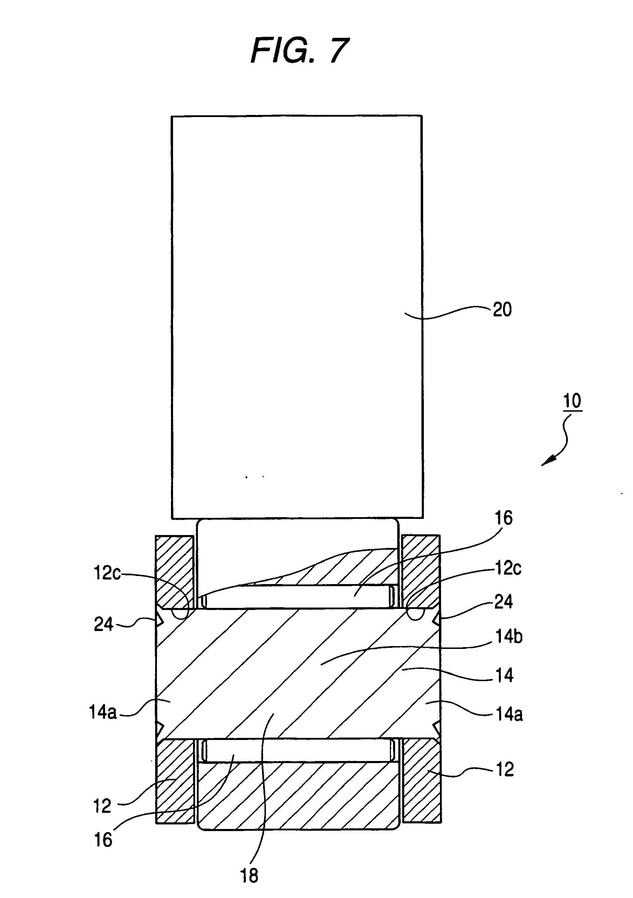

A rocker arm in which the bearing is incorporated is such as to be attached to a valve train of an automotive engine so as to operate to open and close a corresponding valve of the automotive engine when a body of the rocker arm oscillates about a lash adjuster receiving portion (a pivot receiving portion) thereof in association with the rotation of a corresponding valve cam. A conventional example of such a rocker arm will be described by reference to Figs. 6 and 7. A rocker arm 10 shown in these figures includes a pair of opposed side walls 12 which constitute a rocker arm body functioning as a bearing holding member. Since both the side walls 12 are parallel and are formed into the same shape, only one of the pair of side walls 12 is shown in Fig. 6. Both the side walls 12 are connected to each other at longitudinal (left and right in Fig. 6) ends by continuously provided connecting portions, and the continuously provided connecting portions are made to constitute a lash adjuster receiving portion 12a and a valve stem receiving portion 12b, respectively. Through holes 12c are formed coaxially in longitudinally intermediate portions of the side walls 12. A support shaft 14 is provided in such a manner that shaft end portions 14a thereof are fittingly inserted in the through holes 12c in the side walls 12, while a shaft intermediate portion 14b thereof extends between both the side walls 12. An external surface of the shaft intermediate portion 14b of the support shaft 14 constitutes a raceway portion on which an outer ring 18 rolls via a plurality of needle-like rollers 16. The outer ring 18 is supported on the shaft intermediate portion 14b and a cam 20 is brought into abutment with an outer circumferential surface thereof. The cam 20 is fixed to a camshaft which is driven to rotate by a crankshaft which transmits power outputted from an engine.

In the conventional rocker arm that is configured as described above, an external surface of the raceway portion at the shaft intermediate portion 14b of the support shaft is surface hardened by virtue of partial quenching such as induction hardening, whereas no heat treatment is imparted to both the shaft end portions 14a so as to realize such a surface hardness that end faces thereof can be crimped to inner circumferential edges of the through holes 12c in the side walls 12, so that the support shaft 14 is fixed to the side walls 12. Reference numeral 24 denotes crimping portions on the end faces.
In recent years, in such a rocker arm, higher hardness is required for the support shaft 14 in consideration of wear or the like of the external surface of the raceway portion by virtue of ingress of highly hard solid foreign matters mixed in lubricating oil on to the relevant external surface of the raceway portion, and it is pointed out that only the conventional surface hardening imparted to the external surface of the raceway portion at the shaft intermediate portion 14b of the support shaft 14 is not good enough to meet the recent requirement. Patent Document No. 1: JP-A-2004-156688 EP 1 411 142 A1 discloses a roller bearing having at least one of the rollers, the roller shaft and the outer ring being heat-treated by two quenching steps. US 2003/0037635 A1 discloses a cam follower body having a roller shaft being subjected to carbon nitriding followed by tempering. EP 1 463 669 A2 discloses a roller bearing having a rocker arm bearing with a support shaft produced by a first step of car-bonitriding and a second step of induction hardening.

### SUMMARY OF THE INVENTION

A problem that the invention is to solve is to increase further the resistance to wear of the external surface of the raceway portion of the support shaft by imparting surface hardening to the relevant external surface of the raceway portion so as to realize high hardness thereat and to enable the efficient and low-cost crimping of the shaft end faces of the support shaft by enabling the prevention of a crimping mold from securely sticking to the shaft end faces when crimping the shaft end portions of the support shaft to the inner circumferential edges of the shaft end inserting holes in the side walls.

With a view to solving the problem, according to the invention, there is provided a rocker arm bearing comprising a support shaft in which end faces of shaft end portions of the support shaft are crimped to inner circumferential edges of shaft end inserting holes in opposed side walls and an outer ring which is rotatably supported on a raceway portion at a shaft intermediate portion of the support shaft via a plurality of rollers or directly, wherein an external surface of the raceway portion at the shaft intermediate portion of the support shaft is surface hardened by virtue of quenching, and a wear-resistant hard coating is formed on at least the external surface of the raceway portion which is surface hardened. This applies to both cases where the outer ring is supported on the raceway portion at the shaft intermediate portion via the plurality of rollers and where the outer ring is directly supported on the raceway portion at the shaft intermediate portion.

Preferably, the wear-resistant hard coating is also formed on external surfaces of the shaft end portions, and the external surfaces of the shaft end portions including the wear-resistant hard coating is fitted in the inner circumferential edges of the shaft end inserting holes.
The wear-resistant hard coating is preferably a type of coating selected from DLC coating, chrome nitride (CrN) coating and titanium nitride (TiN) coating. Note that as other coatings that can be applied to the wear-resistant hard coating there are raised for example TiAlN, TiBN, C-BN, SiC and the like when they are expressed in chemical symbols, and these can be applied, provided that a hardness of on the order of 1000 in Vickers hardness Hv can be secured.

The support shaft is made of a steel material, and SUJ, SK and SUS materials are preferred. However, there is imposed no limitation thereto. The wear-resistant hard coating is preferably formed after abrasion of the external surface of the raceway portion to which surface hardening has been imparted. When quenching the raceway portion, induction hardening and other quenching processes can be adopted in addition to immersion quenching. The wear-resistant hard coating is preferably formed on the shaft end portions of the support shaft.

The support shaft is made of a steel material, and another intermediate film is formed on the external surface of the support shaft, so that the wear-resistant hard coating can be formed on the intermediate film. While the adhesion properties to the support shaft of a DLC coating as the wear-resistant hard coating are high, when attempting to increase the adhesion properties, the intermediate film can function as a substrate film which increases further the adhesion properties of the wear-resistant hard coating.

Among the wear-resistant hard coatings, the DLC (diamond-like carbon) coating has a hardness of 1000 to 4500, when expressed in Vickers hardness Hv, and a friction coefficient of 0.1 or smaller and is superior in resistance to corrosion, resistance to seizure and resistance to wear. The thickness of the DLC coating can be selected appropriately within a range of about 4µm or smaller. The thickness of the DLC coating is preferably in a range from 0.2 to 3µm and more preferably in a range from 2 to 3µm. The DLC coating can be formed by a physical vapor deposition process (a PVD process) including spattering, ion plating and the like, or a chemical vapor deposition process (a CVD process) including high frequency plasma CVD, optical CVD and the like. DLC is made up of carbon and hydrogen, and the DLC coating includes DLC coatings made up of various molar ratios of carbon and hydrogen, and silicon, nitrogen and oxygenmaybe included. In particular, nitrogen ions may be poured into the DLC coating in a controlled fashion so as to increase the surface hardness of the DLC coating as it approaches a surface layer. The DLC coating may be made up of a single or plurality of DLC coatings of various types. The raceway portion of the support shaft is given a surface hardness of 750 to 800Hv by virtue of the aforesaid quenching, and the surface hardness of the raceway portion may be such as to be increased to, for example, on the order of 1000Hv by the DLC coating. Thus, the hardness of the DLC coating as the wear-resistant hard coating of the invention may be such as to be greater by a predetermined value than the surface hardness obtained by quenching.

The DLC coating has an amorphous construction in which an SP 3 bonding of a diamond construction is mixed with an SP 2 bonding of a graphite construction, and the SP 3 bonding imparts hardness, while the SP 2 bonding imparts slidability (lubricity). Due to this, since the quality of the DLC coating varies depending upon mixing ratios of the SP 2 bonding with the SP 3 bonding, the hardness of the external surface of the support shaft can be adjusted by adjusting, in turn, these mixing ratios.

The chrome nitride coating has a hardness of 1000 to 1400, when expressed in Vickers hardness Hv, and a friction coefficient of 0.25 to 0.35 and is superior in resistance to corrosion, resistance to oxidizing, resistance to seizure and resistance to wear. The thickness of the chrome nitride coating can be selected appropriately within a range of about 20µm or smaller. The chrome nitride coating can be formed by the physical vapor deposition process (the PVD process) including spattering, ion plating and the like, or the chemical vapor deposition process (the CVD process) including high frequency plasma CVD, optical CVD and the like. The raceway portion of the support shaft is given a surface hardness of 800Hv by virtue of the aforesaid quenching, and the surface hardness of the raceway portion may be such as to be increased to, for example, on the order of 1000Hv by the chrome nitride coating. Thus, the hardness of the chrome nitride coating as the wear-resistant hard coating of the invention includes a case where the surface hardness thereof is increased higher than the surface hardness obtained only by quenching.

The titanium nitride coating has a hardness of 2000 to 2500, when expressed in Vickers hardness Hv, and a friction coefficient of 0.3 to 0.45 and is superior in resistance to corrosion, resistance to oxidizing, resistance to seizure and resistance to wear. The thickness of the titanium nitride coating can be selected appropriately within a range generally from 0.2 to 3µm. The titanium nitride coating can be formed by the physical vapor deposition process (the PVD process) including spattering, ion plating and the like, or the chemical vapor deposition process (the CVD process) including high frequency plasma CVD, optical CVD and the like. The raceway portion of the support shaft is given a surface hardness of 800Hv by virtue of the aforesaid quenching, and the surface hardness of the raceway portion may be such as to be increased to, for example, on the order of 1000Hv by the titanium nitride coating. Thus, the hardness of the titanium nitride coating as the wear-resistant hard coating of the invention includes a case where the surface hardness thereof is increased higher than the surface hardness obtained only by quenching.

According the rocker arm bearing of the invention, since the raceway portion at the shaft intermediate portion of the support shaft is surface hardened by virtue of quenching and has the wear-resistant hard coating formed thereon, the surface hardness thereof can be increased to a high hardness which meet a required wear resistance level and at the same time, the crimping of the shaft end faces can be facilitated even in the event that the wear-resistant hard coating is formed on the shaft end portions of the support shaft by setting the thickness of the wear-resistant hard coating to be in a range from 1/500 to 1/5000 of the diameter of the support shaft.

In addition, according to the rocker arm bearing of the invention, since the conventional carburization preventing treatment required when a high concentration carburizing is implemented to surface harden the raceway portion to realize a high hardness thereat does not have to be imparted to the shaft end portions, a bearing construction can be realized which is advantageous in terms of production costs.

A characteristic of the rocker arm bearing of the invention which is to be particularly noticed is that when crimping the end faces of the shaft end portions of the support shaft to the inner circumferential edges of the shaft end inserting holes in the side walls, a crimping mold used to implement such crimping does not securely stick to the end faces, whereby smooth crimping work can be carried out and that crimped portions are shaped highly precisely as a result of the crimping so carried out and the shape so formed is maintained.

Note that the rocker arm bearing of the invention can preferably be applied to either of a rocker arm bearing which includes a support shaft in which end faces of shaft end portions thereof are crimped to inner circumferential edges of shaft end inserting holes in opposed side walls, a plurality of rollers which are disposed on a raceway portion at a shaft intermediate portion of the support shaft and an outer ring which is rotatably supported on the raceway portion via the plurality of rollers and a rocker arm bearing which includes a support shaft in which end faces of shaft end portions thereof are crimped to inner circumferential edges of shaft end inserting holes in opposed side walls and an outer ring which is rotatably supported directly on a raceway portion at a shaft intermediate portion of the support shaft.

According the invention, the resistance to wear of the external surface of the raceway portion of the support shaft can be increased, the securely sticking of the crimping mold to the shaft end faces can be prevented effectively, and the crimping of the shaft end faces of the support shaft can be implemented smoothly and highly accurately

### BRIEF DESCRIPTION OF THE DRAWINGS

Fig. 1 is a side view of a rocker arm in which a rocker arm bearing according to an embodiment of the invention is incorporated.
Fig. 2 is a sectional view taken along the line B-B in Fig. 1.
Figs. 3A and 3B are sectional views of a support shaft which is used to describe a production example of a support shaft shown in Fig. 1.
Fig. 4 is a sectional view of a rocker arm in which a rocker arm bearing according to another embodiment of the invention is incorporated.
Figs. 5A and 5B are sectional views of a support shaft which is used to describe a production example of a support shaft shown in Fig. 4.
Fig. 6 is a side view of a conventional rocker arm.
Fig. 7 is a sectional view taken along the line A-A in Fig. 6.

### DETAILED DESCRIPTION OF PREFERRED EMBODIMENTS

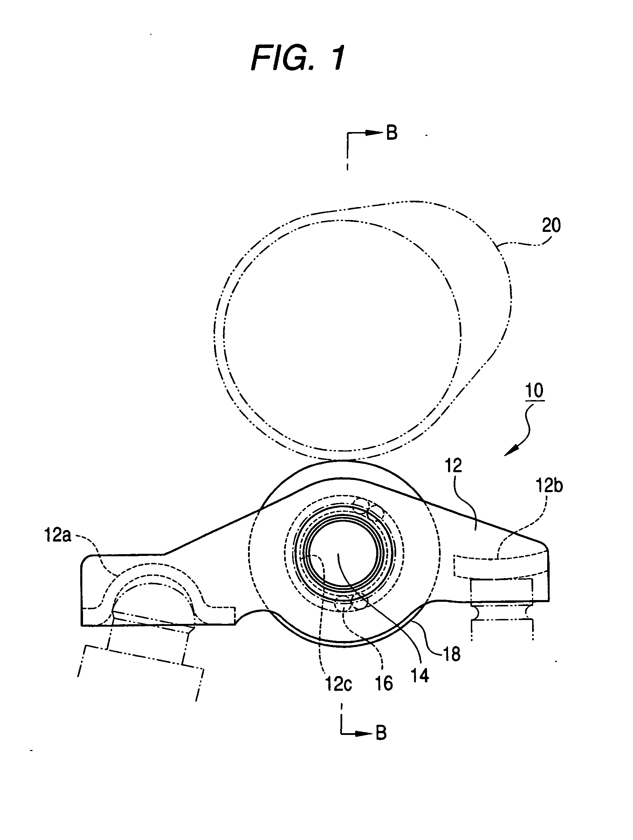

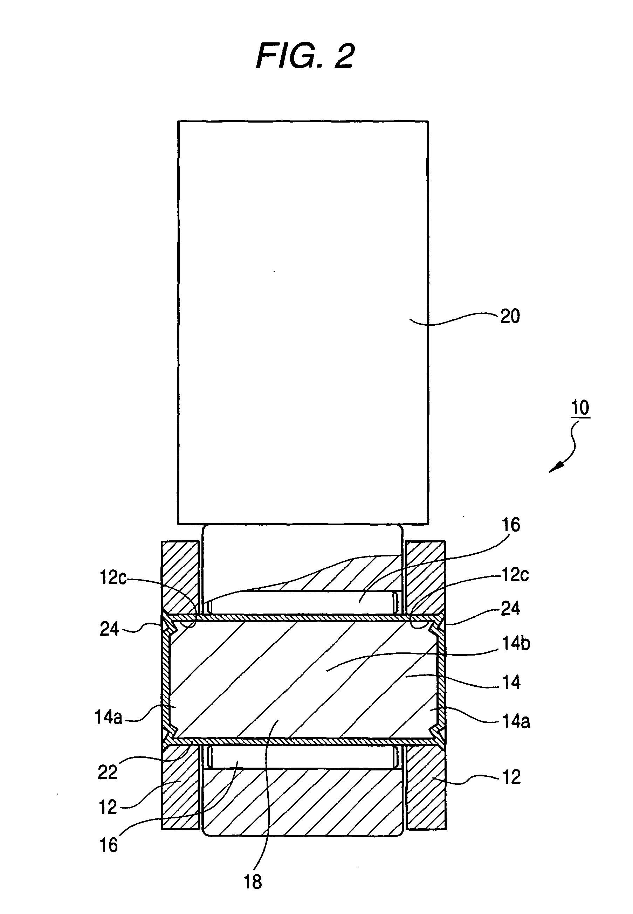

Hereinafter, referring to the accompanying drawings, a rocker arm bearing according to an embodiment of the invention will be described. Note that like reference numerals are imparted to like or similar components and portions throughout the specification for the sake of easy understanding of the description. Fig. 1 is a side view of a rocker arm of an end pivot type which includes a rocker arm bearing according to an embodiment of the invention, and Fig. 2 is a sectional view taken along the line A-A in Fig. 1. A rocker arm 10 shown in those figures includes a pair of opposed side walls 12 which constitute a bearing holding member and at the same time a rocker arm body. Both the side walls 12 are preferably formed into the same shape and are disposed in parallel with each other so as to face each other. A lash adjuster receiving portion 12a and a valve stem receiving portion 12b are provided at longitudinal ends of the side walls 12. Shaft end inserting holes 12c are coaxially provided in the respective side walls 12 at longitudinally intermediate portions thereof. Both the shaft end inserting holes 12c extend axially through the respective side walls 12 with a constant hole diameter. Note that the invention can be applied to a rocker arm of a center pivot type.

A support shaft 14 is made of a steel material which is heat treated by virtue of quenching, tempering or the like. While there is imposed no specific limitation on the type of the steel material of the support shaft 14, steel materials to SUS, SUJ, SKH and the like are preferred. The support shaft 14 is inserted the shaft end inserting holes 12c at shaft end portions 14a thereof, and an outer ring 18 is rotatably fitted on a shaft intermediate portion 14b of the support shaft 14 extending between both the side walls 12 via a plurality of needle-like rollers (rollers such as cylindrical rollers are included) 16 to thereby be supported thereon- A cam 20 is brought into abutment with an outer circumferential surface of the outer ring 18. A case is included where the outer ring 18 is directly fitted on the shaft intermediate portion 14b. An external surface of the shaft intermediate portion 14b constitutes a rolling surface on which the needle-like rollers 16 roll or a roller sliding surface when the outer ring 18 directly slides thereon with no rollers provided. In this embodiment, a racewayportion is used to designate these rolling and sliding surfaces.

A DLC coating 22, which is a rear-resistant hard coating, is formed on the support shaft 14. The DLC coating is formed on the entirety of the external surface of the support shaft 14. Outside diameter sides of end faces of the shaft end portions 14a of the support shaft 14 are crimped to inner circumferential edges of the shaft end inserting holes 12c in the side walls 12. These crimped portions are denoted by reference numeral 24.

In the embodiment that is configured as has been described above, a rocker arm bearing 21 to which the invention can be applied is made up of at least a support shaft 14, needle-like rollers 16 and an outer ring 18.

In this rocker arm bearing 21, a surface hardening treatment is imparted to an external surface of a shaft intermediate portion 14b of the support shaft 14 by virtue of induction hardening so as to realize thereat substantially a hardness of 800 when expressed in Vickers hardness Hv, and a DLC coating 22 having a thickness of 2 to 3µm is formed on the entirety of the external surface of the support shaft 14 by a known CVD process as a wear-resistant hard coating, so that the support shaft 14 is surface hardened to realize thereon a hardness of on the order of 1000 when expressed in Vickers hardness Hv. Note that the thickness of the DLC coating 22 is preferably in a range from 1/500 to 1/5000 of the shaft diameter of the support shaft 14.

According to the rocker arm bearing 21, since the raceway portion at the shaft intermediate portion 14b of the support shaft 14 is surface hardened to realize thereat substantially the hardness of 800 when expressed in Vickers hardness Hv and the DLC coating 22 having the hardness of on the order of 1000 when expressed in Vickers hardness Hv is formed on the entirety of the external surface of the support shaft 14 as the wear-resistant hard coating, the surface hardness of the support shaft 14 can be increased to the high hardness, and at the same time, even when the DLC coating 22 is formed on the shaft end portions 14a, since the thickness of the DLC coating 22 is made so thin to be in the range from 1/500 to 1/5000 of the shaft diameter of the support shaft 14, the crimping of the shaft end faces is enabled. In particular, according to the rocker arm bearing 21, when crimping the shaft end portions 14a of the support shaft 14 to the inner circumferential edges of the through holes 12c in the side walls 12, crimping machine constituent members such as a crimping tool and a crimping mold, which are used to implement such crimping, can be prevented from securely sticking to the shaft end portions 14a, smooth crimping work can be performed, and moreover, crimped portions can be formed into a highly precise shape and the shape so formed can be maintained.

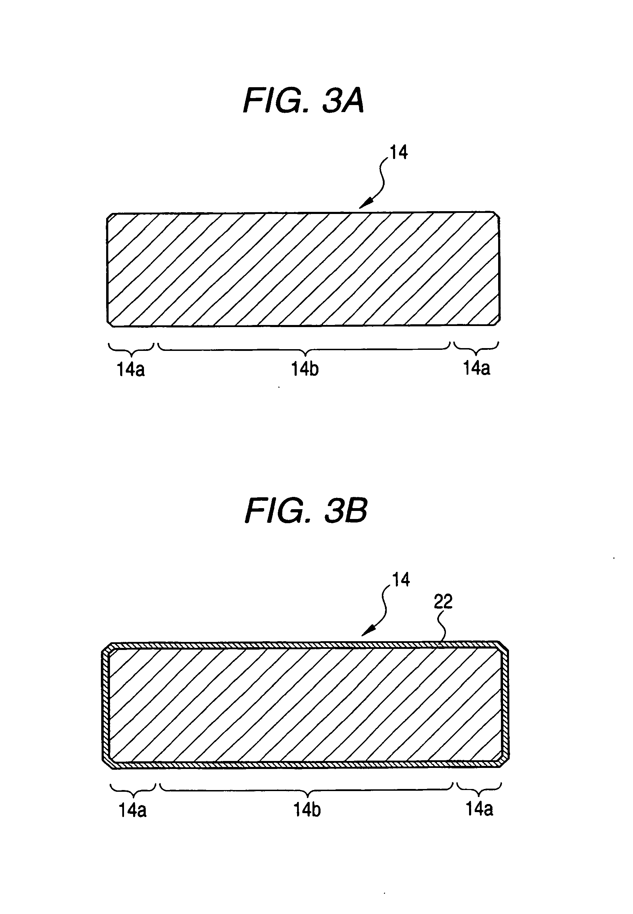

A specific production example of the support shaft 14 will be described by reference to Figs. 3A and 3B. A support shaft 14 is produced of a steel material having a quality specified under SUJ2, and an induction hardening or immersion quenching is then applied thereto. Thereafter, the support shaft 14 is abraded. A section of the support shaft 14 in this state is shown in Fig. 3A. Next, a DLC coating 22 of a thickness in a range of 2 to 3µm is formed on the entirety of an external surface of the support shaft 14 using a vapor deposition process such as the CVD process. The support shaft 14 in this state is shown in Fig. 3B.

Since wear resistant tests were carried out on a rocker arm 10 in which the support shaft 14 produced as described above is incorporated as the rocker arm bearing 21, the test results will be described while referring to Tables 1 and 2.

**Table 1 (Test Conditions)**

| | |
|---|---|
| Load (N) | 400 |
| Rotating speed (r/min) | 2000 |
| Lubricating oil | OW-20 oil which contains 3%wt of solid hard foreign matters |
| Supply oil temperature (°C) | 120 |
| Endurance time (h) | 50 |
| Lubricating method | Lubricating oil is supplied from an outside diameter side upper portion of a sample bearing at a supply rate of 200ml/sec. |
| Evaluation criterion | Depths of wear (µm) of shaft, rollers and outer ring when the endurance time has elapsed. |

**Table 2 (Evaluation Results)**

| Items | | Depths of wear | | | |
|---|---|---|---|---|---|
| | | Shaft | Rollers | Inside diameter side of outer ring | Amount of increase in radial gap |
| Only standard induction hardening was applied | 1^{st} test | 16 | 2 | 5 | 30 |
| | 2^{nd} test | 20 | 4 | 5,5 | 39 |
| | 3^{rd} test | 14 | 2 | 3,5 | 25 |
| DLC coating | 1^{st} test | 1 | 2 | 3 | 11 |

As shown in Table 1, the test conditions were such that the load (N) applied was 400N, the rotating speed (r/min) was 2000, a lubricating oil used was a 0W-20 oil which contained 3%wt of solid foreign matters, the supply oil temperature (°C) was 120, the endurance time (h) was 50, a lubricating oil supply method was used in which the lubricating oil was supplied from an outside diameter side upper portion of the outer ring 18 at a supply rate of 200ml/sec, and as an evaluation criterion, depths of wear (µm) of the support shaft 14, needle-like rollers 16 and outer ring 18 when the endurance time has elapsed were used.

As shown in Table 2, the results of the first, second and third tests carried out on a rocker arm in which only the induction hardening was applied thereto showed that depths of wear of a support shaft 14 were 16, 20, 14 (µm), depths of wear of needle-like rollers 16 were 2, 4, 2 (µm), depths of wear of an external surface of an outer ring 18 on an inside diameter side thereof were 5, 5.5, 5, 3.5(µm), and amounts of increase in radial gap were 30, 39, 25(µm). In contrast, the results of the first test carried out on a rocker arm in which a DLC coating 22 was formed in addition to the induction hardening applied showed that a depth of wear of a support shaft 14 was 1 (µm), a depth of wear of needle-like rollers 16 was 2 (µm), a depth of wear of an external surface of an outer ring 18 on an inside diameter side thereof was 3(µm), and an amount of increase in radial gap was 11(µm).

As is clear from the results of the tests, the depth of wear of the external surface of the support shaft 14 was remarkably reduced by forming the DLC coating 22 on the external surface of the support shaft 14, and the amount of increase in radial gap was suppressed so largely as to be reduced to about one third of the amount of increase in gap which resulted when only the induction hardening was applied. In addition, while the tests were carried out on the rocker arm 10 in which the induction hardening imparted support shaft 14 was incorporated, the same test results were obtained from tests carried out on a rocker arm 10 in which a immersion quenching imparted support shaft was incorporated.

### (Another Embodiment)

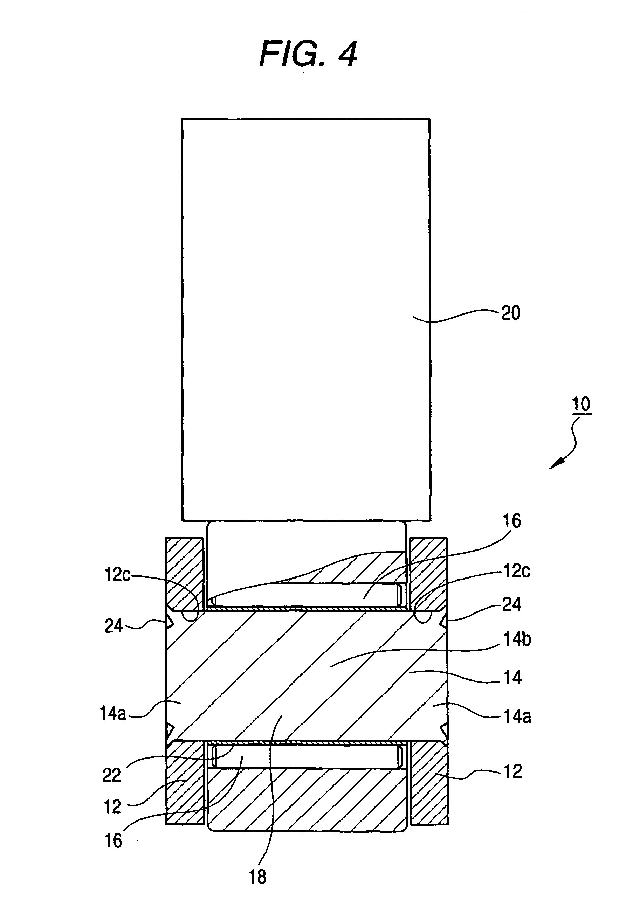

A rocker arm bearing according to another embodiment of the invention will be described by reference to Fig. 4. In an rocker arm bearing 21 according this embodiment, a surface hardening treatment is imparted to a support shaft 14 so that a hardness of on the order of 800 when expressed in Vickers hardness Hv is realized on an external surface of a shaft intermediate portion 14b thereof by virtue of induction hardening, and a DLC coating 22 is further formed, as a wear-resistant hard coating, only on the external surface of the shaft intermediate portion 14b which has already been surface hardened, whereby the external surface of the shaft intermediate portion 14b is surface hardened so as to realize thereat a hardness of on the order of 1000 when expressed in Vickers hardness Hv.

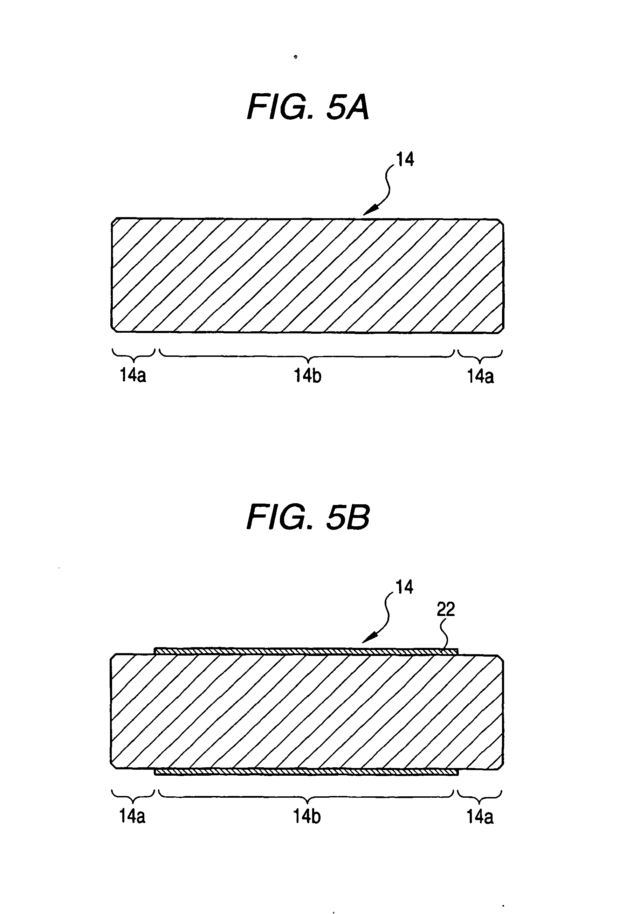

A specific production example of the support shaft 14 will be described by reference to Figs. 5A and 5B. The support shaft 14 is produced of a steel material having a quality specified under SUJ2, and an induction hardening or immersion quenching is imparted to the support shaft 14 so produced, thereafter, the support shaft 14 so treated being abraded. A section of the support shaft 14 in this state is shown in Fig. 5A. Next, a DLC coating of a thickness in a range of 2 to 3µm is formed on the entirety of an external surface of the support shaft 14 using a vapor deposition process such as the CVD process. The support shaft 14 in this state is shown in Fig. 3B with shaft end portions 14a of the support shaft 14 masked. A section of the support shaft 14 in this state is shown in Fig. 5B. Note that the thickness of the DLC coating 22 so formed is preferably in the range from 1/500 to 1/5000 of the shaft diameter of the support shaft 14.
The same test results as those shown in the aforesaid Table 2 could be obtained when wear resistant tests were carried out on a rocker arm 10 in which the support shaft 14 produced as described above was incorporated as a rocker arm bearing 21 under the same test conditions specified under Table 1.

According to the rocker arm bearing 21, since a raceway portion at the shaft intermediate portion 14b of the support shaft 14 is surface hardened by virtue of quenching, so as to realize thereat the hardness of on the order of 800 when expressed in Vickers hardness Hv and the DLC coating 22 having the hardness of on the order of 1000 when expressed in Vickers hardness Hv is formed thereon as the wear-resistant hard coating, the surface hardness is increased to the higher hardness, and at the same time, even when the DLC coating 22 is formed on the shaft end portions 14a, since the thickness of the DLC coating 22 so formed is so thin to be in the range from 1/500 to 1/5000 of the shaft diameter of the support shaft 14, the crimping of the shaft end faces can be implemented as required.

Note that the invention is not limited to the embodiments that have been described hitherto, and hence, various alterations and modifications can be made thereto without departing from the scope of claims thereof.

## Claims

1. A rocker arm bearing comprising:
a support shaft (14) that includes end faces of shaft end portions (14a), respectively, fitted to inner circumferential edges of shaft end inserting holes (12c), respectively, formed through opposed side walls (12) which constitute a rocker arm body, and a raceway portion at a shaft intermediate portion (14b) thereof; and
an outer ring (18) which is rotatably supported on the raceway portion via a plurality of rollers (16) or directly,
wherein the raceway portion is surface hardened by quenching, **characterized in that** a wear-resistant hard coating (22) is coated on at least an external surface of the raceway portion which is surface hardened.

2. The rocker arm bearing according to claim 1, wherein
the wear-resistant hard coating (22) is formed on external surfaces of the shaft end portions (14a), and
the external surfaces of the shaft end portions (14a) including the wear-resistant hard coating is fitted in the inner circumferential edges of the shaft end inserting holes.

3. The rocker arm bearing according to claim 1, wherein the wear-resistant hard coating (22) is a type of coating selected from DLC coating, chrome nitride coating and titanium nitride coating.

4. The rocker arm bearing according to claim 1, wherein a thickness of the wear-resistant hard coating (22) is in a range from 1/500 to 1/5000 of the diameter of the support shaft.

## Patentansprüche

1. Kipphebel-Lager, umfassend:
eine Lagerwelle (14), die jeweils Endflächen der Wellenendbereiche (14a), die jeweils in Innenumfangskanten der Wellenenden-Einsetzlöcher (12c) eingepasst sind, die durch gegenüberliegende Seitenwände (12) gebildet sind, welche einen Kipphebel-Körper darstellen, und einen Laufringbereich an einem Wellenzwischenbereich (14b) davon umfasst; und
einen Außenring (18), der über eine Vielzahl von Walzen (16) oder direkt auf dem Laufringbereich drehbar gelagert ist,
wobei der Laufringbereich durch Quenchen oberflächengehärtet ist, **dadurch gekennzeichnet, dass** eine verschleißfeste Hartbeschichtung (22) auf zumindest einer externen Oberfläche des Laufringbereichs, der oberflächengehärtet ist, aufgebracht ist.

2. Kipphebel-Lager nach Anspruch 1, wobei die verschleißfeste Hartbeschichtung (22) auf externen Oberflächen der Wellenendbereiche (14a) ausgebildet ist, und die externen Oberflächen der Wellenendbereiche (14a) einschließlich der verschleißfesten Hartbeschichtung in den Innenumfangskanten der Wellenenden-Einsetzlöcher eingepasst sind.

3. Kipphebel-Lager nach Anspruch 1, wobei die verschleißfeste Hartbeschichtung (22) eine Art von Beschichtung ist, die aus DLC-Beschichtung, Chromnitrid-Beschichtung und Titannitrid-Beschichtung ausgewählt ist.

4. Kipphebel-Lager nach Anspruch 1, wobei eine Dicke der verschleißfesten Hartbeschichtung (22) in einem Bereich von 1/500 bis 1/5000 des Durchmessers der Lagerwelle liegt.

## Revendications

1. Palier de culbuteur, comprenant :
un arbre de support (14) qui comprend des faces d'extrémité des parties d'extrémité d'arbre (14a), respectivement, montées sur des bords circonférentiels internes des trous d'insertion d'extrémité d'arbre (12c), respectivement, formés à travers des parois latérales opposées (12) qui forment un corps de culbuteur, et une partie de chemin de roulement au niveau de sa partie intermédiaire d'arbre (14b) ; et
une bague externe (18) qui est supportée de manière rotative sur la partie de chemin de roulement via une pluralité de rouleaux (16) ou directement,
dans lequel la partie de chemin de roulement est durcie en surface par une opération de trempe, **caractérisé en ce qu'**un revêtement dur résistant à l'usure (22) est appliqué sur au moins une surface externe de la partie de chemin de roulement qui est durcie en surface.

2. Palier de culbuteur selon la revendication 1, dans lequel le revêtement dur résistant à l'usure (22) est formé sur des surfaces externes des parties d'extrémité d'arbre (14a), et
les surfaces externes des parties d'extrémité d'arbre (14a) comprenant le revêtement dur résistant à l'usure est monté dans les bords circonférentiels internes des trous d'insertion d'extrémité d'arbre.

3. Palier de culbuteur selon la revendication 1, dans lequel le revêtement dur résistant à l'usure (22) est un type de revêtement choisi parmi le revêtement DLC, le revêtement au nitrure de chrome et le revêtement au nitrure de titane.

4. Palier de culbuteur selon la revendication 1, dans lequel une épaisseur du revêtement dur résistant à l'usure (22) représente de 1/500 à 1/5000 du diamètre de l'arbre de support.
